# EUROPÄISCHE PATENTSCHRIFT

(11) **EP 4 208 069 B1**
(45) Veröffentlichungstag und Bekanntmachung des Hinweises auf die Patenterteilung: **07.08.2024**
(21) Anmeldenummer: 21769468.6
(22) Anmeldetag: 01.09.2021
(51) Int. Cl.: A47J 31/60, C02F 1/00, B01D 35/027, B01D 27/08, B01D 29/11, B01D 29/96, B01D 35/153

(54) **FILTERPATRONE**
FILTER CARTRIDGE
CARTOUCHE FILTRANTE

(30) Priorität: 03.09.2020 DE 102020123004; 03.09.2020 DE 102020123005; 22.03.2021 DE 102021107068
(43) Veröffentlichungstag der Anmeldung: 12.07.2023
(73) Patentinhaber: ACLARIS GmbH, Lindau Zweigniederlassung Rebstein, 9445 Rebstein (CH)
(72) Erfinder: WALLERSTORFER, Kurt, 5204 Strasswalchen (AT)
(74) Vertreter: Otten, Roth, Dobler & Partner mbB Patentanwälte
(86) Internationale Anmeldenummer: PCT/EP2021/074148
(87) Internationale Veröffentlichungsnummer: WO 2022/049133

(56) Entgegenhaltungen:
- EP-A1- 2 138 078
- WO-A2-2008/017492
- DE-A1- 102014 223 648
- US-A1- 2006 054 547
- US-A1- 2010 025 317

## Beschreibung

Die Erfindung betrifft eine Filterpatrone nach dem Oberbegriff des Anspruchs 1.

In wasserführenden Haushaltsmaschinen mit einem Wassertank, insbesondere in Getränkemaschinen, wie Kaffeemaschinen, Teemaschinen, etc., werden regelmäßig Filterpatronen eingesetzt, um die Wasserqualität entsprechend der vorgesehenen Anwendung zu verbessern. Häufig werden in solchen Filterpatronen Filtermedien zur Wasserenthärtung, wie z.B. Ionentauscherharz, oder zur Geschmacksverbesserung, wie z.B. Aktivkohle, verwendet. Auch die dosierte Zugabe von Zusatzstoffen, z.B. für die Gesundheit oder Geschmacksverbesserung, wie die Zugabe von Mineralien oder Vitaminen, etc., wird bereits in Kombination mit Filtermedien vorgesehen.

Wassertanks derartiger Maschinen nach dem Stand der Technik weisen regelmäßig am Tankboden Tankanschlusselemente mit einer ringförmige Tankdichtfläche zum dichten Anschluss eines Filteranschlusselementes der für einen solchen Wassertank vorgesehenen Filterpatrone auf, die eine Tankdurchgangsöffnung im Tankboden zum Durchfluss des Wassers aus der Filterpatrone und dem Wassertank zur Haushaltsmaschine umschließen.

Solche Wassertanks und Filterpatronen sind beispielsweise in den Druckschriften DE 10 2004 050 877 A1, EP 1 867 626 A1 und DE 197 17 056 C2 beschrieben.

Um zu verhindern, dass ungeeignete Filterpatronen zum Einsatz kommen, wurden die Tankanschlusselementen bereits mit Kodierungselementen versehen, so dass nur zu diesen Kodierungselementen passende Filterpatronen zum Einsatz kommen können.

Die Druckschrift EP 2 138 078 A1 offenbart eine Anschlussvorrichtung zur dauerhaften Verbindung mit einem Tankboden, der zur Verbindung mit dem Tankboden taschenförmige Verbindungselemente aufweist. Diese werden mit tankseitigen Fixiermitteln so verbunden, dass sie nicht mehr zerstörungsfrei vom Tank lösbar sind. In diese Anschlussvorrichtung ist sodann eine Filterpatrone austauschbar einzusetzen, wobei die Anschlussvorrichtung und die Filterpatrone sechskantförmige Kodierstrukturen aufweisen.

In bestimmten Ausführungen, die beispielsweise in den Druckschriften WO 2008/017492 A2, EP 2 433 906 B1, EP 2 063 972 B1, EP 2 049 220 B1, EP 2 049 221 B1 und EP 2 049 218 B1 offenbart sind, wurde auch eine polygonale Form der Dichtungen und Tankdichtflächen zur Kodierung verwendet, so dass mit der Dichtung selbst neben der Dichtfunktion auch eine zusätzliche Kodierungs- und Fixierfunktion ausgeübt wird.

Diese Ausführungen haben den Nachteil, dass sich durch die eckige Kontur die Fixierfunktion auf die Ecken beschränkt und gegenüber einer runden Kontur zugleich die Dichtfunktion erschwert ist.

Aufgabe der Erfindung ist es daher, eine solche Filterpatrone derart weiterzubilden, dass die genannte Nachteile vermieden und die Fixierung der Filterpatrone verbessert wird.

Diese Aufgabe wird ausgehend von einer Filterpatrone nach dem Oberbegriff des Anspruchs 1 durch dessen kennzeichnende Merkmale gelöst.

Im Folgenden werden allgemein der Filterpatrone zuzuordnende Elemente mit dem zuordnenden Wortanfang "Filter" und dem Wassertank zuzuordnende Elemente mit dem zuordnenden Wortanfang "Tank" versehen. Merkmale vorteilhafter Ausführungen und Weiterbildungen der Erfindung werden im Folgenden so beschrieben, dass sie nicht zwingend vorhanden sind, jedoch vorhanden sein können.

Eine erfindungsgemäße Filterpatrone ist mit einem Filtergehäuse versehen, dessen Wandung eine Gehäuseinnenseite von einer Gehäuseaußenseite trennt, wobei eine offene Filtereinlassöffnung für den Wassereintritt aus dem Wasservorrat ohne weitere Anschlusselemente vorgesehen ist, die dementsprechend beim Einsatz in einem Wassertank in Betriebsposition der Filterpatrone mit dem Tankinneren verbunden ist. Bezogen auf die Strömungsrichtung im Betrieb ist im Anschluss an die Filtereinlassöffnung eine Vorrichtung zur Wasserleitung im Inneren des Filtergehäuses vorgesehen, die wenigstens eine, wenigstens ein Filtermedium aufweisende Filterkammer umfasst und in einer Filterauslassöffnung zum Absaugen von Wasser aus der Filterpatrone endet. Ein Filteranschlusselement ist mit einem ringförmigen Filteranschlussstutzen vorgesehen, der eine ringförmige Filterfixierfläche zur Fixierung gegenüber einer tankseitigen Tankfixierfläche aufweist.

Eine solche Filterpatrone unterscheidet sich durch diese Ausgestaltung von Filterpatronen von Filtervorrichtungen, deren Gehäuse mit druckfesten Anschlüssen dicht an Wasserleitungen eines Wassernetzes angeschlossen und so in das Wassernetz eingebunden werden.

Eine erfindungsgemäße Filterpatrone wird mit einer Filterfixierfläche versehen, deren Verlauf entlang dem Umfang des ringförmigen Filteranschlussstutzens einen variierenden Radius gegenüber einer zentralen Achse aufweist, so dass die Filterfixierfläche radiale Ausbuchtungen und/oder radiale Einbuchtungen umfasst, wobei die Ausbuchtungen und/oder Einbuchtungen einen runden Verlauf aufweisen, so dass Ecken oder Kanten vermieden werden.

Hierdurch wird die Fixierfunktion verbessert und es bestehen weitere Möglichkeiten der Kodierung. Diese Form der Filterfixierfläche passt auf eine korrespondierende Form einer Tankfixierfläche, wobei durch die im Verlauf des Umfangs von außen nach innen und umgekehrt wechselnden Krümmungen das Aufspannen einer in der Form nicht angepassten Dichtung auf eine feste tankseitige Anlagefläche erschwert oder ganz verhindert ist.

Die erfindungsgemäße Form der Filterfixierfläche erleichtert eine Verformung des Filteranschlussstutzens im Bereich der Filterfixierfläche, da die radialen Ausbuchtungen und/oder Einbuchtungen die Form einer Ringfeder ausbilden, deren Umfang federnd geweitet oder zusammengedrückt werden kann. Durch eine solche durch den variierenden Radius erleichterte Verformung ist eine Verbesserung der mechanischen Klemmung und damit der Fixierung beispielsweise im Vergleich mit einer Kreisform oder einer Polygonform möglich.

Vorteilhafterweise wird diese Filterfixierfläche zugleich als Filterdichtfläche vorgesehen. Dabei verbessert die Federwirkung der Ringfeder auch die Dichtwirkung, da durch den Federdruck die Filterdichtfläche an die zugehörige Tankdichtfläche flächig angedrückt wird. Da durch die beschriebene Form der Filterfixierfläche auch Ecken oder Kanten vermieden werden, verbessert diese Form die Dichtfunktion zusätzlich zur federnden Wirkung.

Die federnde Verformbarkeit der Filterfixierfläche kann dadurch verbessert werden, dass der die Filterfixierfläche aufweisende ringförmige Filteranschlussstutzen des Filteranschlusselementes im Bereich der Filterfixierfläche eine ringförmige Wand mit einer Wandinnenseite und einer Wandaußenseite aufweist, die parallel oder zueinander geneigt verlaufen. Je nachdem ob der Anschlussstutzen auf eine Tankfixierfläche aufgesteckt oder in eine Tankfixierfläche eingesteckt wird, umfasst oder bildet die Wandaußenseite und/oder die Wandinnenseite der ringförmigen Wand die Filterfixierfläche.

Da in dieser Ausbildung die der Filterfixierfläche gegenüberliegende Seite der Wand die gleiche Form mit entsprechend größerem oder kleinerem Umfang aufweist, ist diese Wand insgesamt als Ringfeder ausgebildet. Die ringförmige Wand bildet dann eine Ringfeder mit parallelen oder zueinander geneigten Umfangsseiten.

Weiterhin kann der ringförmige Filteranschlussstutzen des Filteranschlusselementes eine Außen- und/oder eine Innenwand aufweisen, die gegenüber der Vertikalen abgeschrägt ist, so dass die Außenwand und die Innenwand bezogen auf die Betriebsposition der Filterpatrone von oben nach unten zusammenlaufen. Hierdurch ergibt sich eine Führungshilfe, die das Einführen des Anschlussstutzens in einen Spalt zwischen zwei passend geformten tankseitigen Flächen erleichtert, wobei die tankseitigen Flächen wenigstens teilweise eine innere und/oder äußere Tankdichtfläche bilden können.

Dementsprechend kann die abgeschrägte Außenwand eine äußere und/oder die abgeschrägte Innenwand eine innere Filterfixierfläche aufweisen, um mit der korrespondierenden Tankdichtfläche einen fixierenden und ggf. dichtenden Formschluss einzugehen.

In einer Weiterbildung der Erfindung ist die Anordnung der Ausbuchtungen und Einbuchtungen der Filterfixierfläche drehsymmetrisch über den Umfang ausgebildet. Dadurch ergibt sich eine gleichmäßig über den Umfang verteilte Rückstellkraft der Ringfeder mit einer stabileren Fixierung und Dichtung der Filterpatrone in montierter Position. Eine drehsymmetrische Ausbildung der Filterfixierfläche ergibt sich dann, wenn die Ausbuchtungen und/oder Einbuchtungen periodisch um eine Kreislinie oszillierend ausgebildet sind. Dadurch sind verschiedene Winkelpositionen der Filterpatrone möglich, wodurch deren Anschluss erleichtert wird. Zudem können auch weitere technische Funktionen winkelabhängig vorgesehen werden.

Eine stabilere Fixierung der Filterpatrone in der Einbauposition wird dadurch erreicht, dass die Anordnung der Ausbuchtungen und Einbuchtungen der Filterfixierfläche mit gleichen Winkeln über den Umfang ausgebildet ist. Die so gebildete Ringfeder kann sich so gleichmäßig über den Umfang sowohl im Bereich der Ausbuchtungen als auch im Bereich der Einbuchtungen verformen.

Die Ausbuchtungen und Einbuchtungen der Filterfixierfläche können eine Wellenform entlang einer Kreislinie bilden, wobei die Wellenform aus einer alternierenden Abfolge von konvexen, die Ausbuchtungen bildenden Kreissegmenten und konkaven, die Einbuchtungen bildenden Kreissegmenten besteht. Durch den einer Kreislinie folgenden Verlauf ergibt sich eine radial gerichtete Federwirkung.

Die Federwirkung der Ringfeder kann weiter verbessert werden, wenn die konkaven und konvexen Kreissegmente in Wendepunkten beim Übergang zwischen konkaven und konvexen Krümmungen tangential verbunden sind.

In einer bestimmten Ausführung der Erfindung ist die Bogenlänge der konvexen Kreissegmente länger, als die Bogenlänge der konkaven Kreissegmente. Der überstrichene Winkel der konvexen Kreissegmente ist also größer als der überstrichene Winkel der konkaven Kreissegmente. Dadurch verläuft der tangentiale Übergang zwischen den Krümmungen schräg gegenüber einem Mittelkreis der Ringfeder, so dass in den Übergängen keine radial nach innen oder außen gerichtete Kraft bei der Verformung entsteht.

In einer bestimmten Ausführungsform weisen die konvexen und die konkaven Kreissegmente den gleichen Segmentradius auf. Dadurch ergibt sich innerhalb der Segmente eine vergleichbare Kraftverteilung bei der Verformung.

Die Kreissegmente können so angeordnet werden, dass die konvexen und die konkaven Kreissegmente innerhalb eines äußeren Hüllkreises und außerhalb eines inneren Hüllkreises liegen, wobei die Kreismittelpunkte der konvexen Kreissegmente innerhalb des inneren Hüllkreises und die Kreismittelpunkte der konkaven Kreismittelpunkte außerhalb des äußeren Hüllkreises liegen. Diese Form ergibt einen flachen Verlauf gegenüber den Hüllkreisen bzw. einer Mittellinie zwischen den Hüllkreisen verlaufende Kreissegmente, wodurch das Weiten oder Schrumpfen der Ringfeder erleichtert wird.

Eine gute Funktion hat sich dann gezeigt, wenn der Radius des inneren Hüllkreises zwischen 5% und 15% des Radius des äußeren Hüllkreises beträgt.

Weiterhin hat sich als vorteilhaft erwiesen, wenn der Radius der konvexen und/oder konkaven Kreissegmente zwischen 20% und 35% des Radius des äußeren Hüllkreises beträgt.

Der Federwirkung eines solchen Federringes kommt es weiterhin entgegen, wenn die Wandstärke zwischen der Wandaußenseite und der hierzu parallel oder geneigt verlaufenden Wandinnenseite zwischen 7% bis 10 % des Radius des äußeren Hüllkreises beträgt.

Zudem hat sich ein Verlauf dann als vorteilhaft gezeigt, wenn die Wendepunkte zwischen den Krümmungen der konkaven und konvexen Kreissegmente näher an dem inneren Hüllkreis als an dem äußeren Hüllkreis liegen.

Die Filterfixierfläche kann eine von einer zentralen Achse der Filterauslassöffnung wegweisenden Außenfläche des ringförmigen Filteranschlussstutzens des Filteranschlusselementes bilden. Ein solcher Filteranschlussstutzen ist trotz der wechselnden umfangseitigen Krümmungen in der Lage, beim Einstecken in eine wassertankseitige Öffnung mit dementsprechend radial nach innen weisender Tankfixierfläche im Wesentlichen über den gesamten Umfang einen federnden Anpressdruck nach außen auszuüben, um die gewünschte Fixierwirkung zu erzielen. Umgekehrt kann auch beim Aufstecken auf einen wassertankseitigen Tankanschlussstutzen mit dementsprechend radial nach außen weisender Tankfixierfläche durch eine radial nach innen weisende Filterfixierfläche im Wesentlichen über den gesamten Umfang ein federnder Anpressdruck nach innen ausgeübt werden, um die gewünschte Fixierwirkung zu erzielen.

In einer besonderen Ausführungsform der Erfindung ist sowohl auf der Innenseite als auch auf der Außenseite des Filteranschlussstutzens eine Filterfixierfläche vorgesehen, von denen eine oder beide zugleich eine Filterdichtfläche bilden. Ein solcher Filteranschlussstutzen kann in einen tankseitigen Ringschlitz eingeführt werden, dessen Seitenwände jeweils eine Tankfixierfläche und/oder Tankdichtfläche bilden.

Für die Verwendung einer Elastomerdichtung ist es von Vorteil, wenn der die Filterfixierfläche aufweisende ringförmige Filteranschlussstutzen des Filteranschlusselementes wenigstens im Bereich wenigstens einer als Filterdichtfläche vorgesehenen Filterfixierfläche aus einem bei Betriebstemperatur gegenüber einem Elastomer formfesteren Kunststoff besteht.

Durch diese Festigkeit ist der Filteranschlussstutzen der Filterpatrone einerseits nach wie vor in der Lage, über die Filterfixierfläche einen federnden Anpressdruck auf eine tankseitige Tankfixierfläche auszuüben, um einen fest gespannten Sitz der Filterpatrone herzustellen. Eine solche Fixierung kann beispielsweise an der Innen-und/oder der Außenseite des Filteranschlussstutzens stattfinden.

Andererseits kann ein solcher Filteranschlussstutzen ohne weiteres auch eine tankseitige Elastomerdichtung auf der Wassertankseite so verformen, dass sich diese dicht an die die Filterdichtfläche bildende Filterfixierfläche anschmiegt. Diese Verformung könnte ebenfalls auf der Innen- und/oder Außenseite des Filteranschlussstutzens stattfinden.

Je nach Ausführungsform wird eine so verformbare Elastomerdichtung entweder innen oder außen vorgesehen oder so ausgestaltet, dass sie einen Ringschlitz aufweist, in den der Filteranschlussstutzen eingeführt werden kann.

Durch eine Verformung einer Elastomerdichtung können neben der Fixierfunktion und der Dichtfunktion auch eine oder mehrere weitere Funktionen bewirkt werden. Dies kann beispielsweise auch eine hydraulische Funktion, wie eine Ventilfunktion oder dergleichen sein.

Die Dichtwirkung der Filterdichtfläche mit der Tankdichtfläche wird wie o.a. verbessert, wenn die Ausbuchtungen und/oder Einbuchtungen einen runden Verlauf aufweisen, so dass Ecken oder Kanten vermieden werden.

Eine sehr gut funktionierende Konstellation hat sich beispielsweise gezeigt, wenn sechs Ausbuchtungen und sechs Einbuchtungen entlang einer Kreislinie vorgesehen sind, die einen Durchmesser kleiner 3cm aufweist.

Die Filtereinlassöffnung der Filterpatrone kann auf der Außenseite des Filteranschlussstutzens als ringförmige Sieböffnung ausgebildet werden, wodurch die Filterpatrone im Wassertank für das darin befindliche Wasser offen ist.

Eine Verbesserung der Filterpatrone ergibt sich dann, wenn innerhalb des Filteranschlussstutzens eine Führungsstruktur zur Führung und Aufnahme eines Wassertankseitigen Zentrierelementes vorgesehen ist. Damit kann die Filterpatrone beim Einsetzen in den zugehörigen Wassertank in axialer Richtung ausgerichtet und in der Betriebsposition in dieser Ausrichtung fixiert werden.

Weist die Führungsstruktur wenigstens eine in axialer Richtung verlaufende, also parallel zur zentralen Achse verlaufende Führungsnut zur Aufnahme wenigstens einer Führungsrippe des wassertankseitigen Zentrierelementes auf, so kann über diese Führungsstruktur in Wechselwirkung mit dem zugehörigen wassertankseitigen Zentrierelementes die Filterpatrone mit der axialen Bewegung beim Einsetzen in den Wassertank in wenigstens eine Winkelpositionen geführt und dort zusätzlich fixiert werden.

Um eine Führung und Fixierung in mehreren Winkelpositionen vorzusehen, kann die Führungsstruktur hierzu mehrere umfangsseitig verteilte Führungsnuten aufweisen.

Eine gute Führung der Filterpatrone in die gewünschte Winkelposition ergibt sich dann, wenn die Wandung der Führungsnuten derart gerundet ist, dass die Nutenbreite bezogen auf die Betriebsstellung sich von unten nach oben verjüngt. Die Führung der Filterpatrone kann zudem verbessert werden, wenn die Wandung der Führungsnuten derart gerundet ist, dass die Nutenbreite sich radial von innen nach außen verjüngt. In Kombination der beiden sich verjüngenden Nutenformen ergibt sich eine Art Trichtereffekt für eine in eine solche Nut eintretende Rippe eines wassertankseitigen Zentrierelementes.

Die genannten Nutenformen können beispielsweise mittels Innenwölbungen in einer die Führungsnuten verbindenden Wandung der Führungsstruktur ausgebildet werden.

Ein Ausführungsbeispiel der Erfindung ist in der Zeichnung dargestellt und wird anhand der nachfolgenden Figuren näher erläutert.

### Im Einzelnen zeigen

Fig.1 eine perspektivische Darstellung eines Tankbodens mit eingesetzter Filterpatrone nach dem Stand der Technik,
Fig.2 eine perspektivische Explosivdarstellung eines Tankbodens mit Zentrierelement und Befestigungsring,
Fig.3 eine perspektivische Darstellung des Tankbodens gemäß Fig. 2 mit eingebautem Zentrierelement und eingebautem Befestigungsring,
Fig.4 eine Draufsicht auf den Tankboden gemäß den Figuren 2 und 3,
Fig.5 eine perspektivische Darstellung des Anschlussbereiches der Filterpatrone von der Seite betrachtet,
Fig.6 eine perspektivische Darstellung des Anschlussbereiches der Filterpatrone von schräg unten betrachtet,
Fig.7 eine perspektivische Darstellung einer auf Höhe des Filteranschlussstutzens aufgeschnittenen Filterpatrone, eingesetzt in einen Tankboden,
Fig.8 eine perspektivische Darstellung einer auf Höhe der Führungsnuten aufgeschnittenen Filterpatrone, eingesetzt in einen Tankboden,
Fig. 9 eine perspektivische Darstellung einer Filterpatrone, eingesetzt in einen Tankboden,
Fig. 10 eine perspektivische Darstellung des Zentrierelementes,
Fig. 11 eine Schnittdarstellung eines Tankbodens ohne Filterpatrone bei geöffnetem Wassertankventil,
Fig. 11a und b zwei Ausschnittvergrößerungen aus Fig. 11 zur Veranschaulichung einer verschließbaren Bypassleitung in der Tankdichtung,
Fig. 12 eine Schnittdarstellung eines Tankbodens gemäß Fig. 11 mit eingesetzter Filterpatrone,
Fig. 12a eine Ausschnittvergrößerung aus Fig. 12 zur Veranschaulichung der geschlossenen Bypassleitung,
Fig. 13 eine schematische Stirnansicht eines erfindungsgemäßen Filteranschlussstutzens,
Fig. 13a eine Ausschnittvergrößerung aus Fig. 13 und
Fig. 14 einen den Anschlussbereich zeigenden Ausschnitt der Filterpatrone zur Veranschaulichung einer Führungshilfe durch Abschrägungen des Anschlussstutzens.

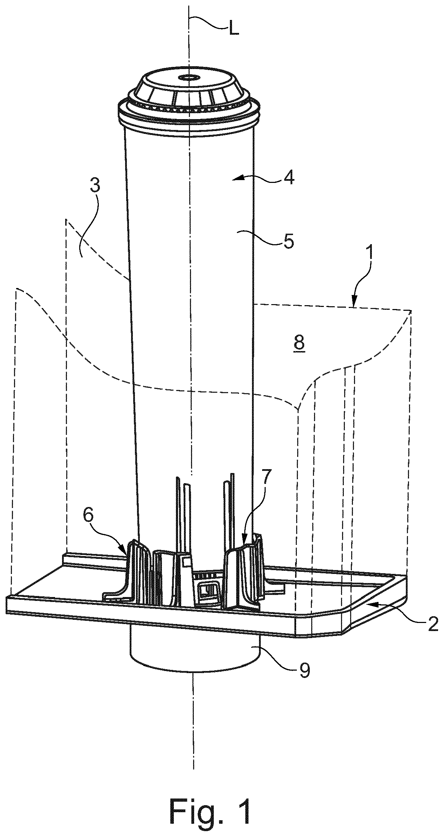

Fig. 1 veranschaulicht die übliche Ausgestaltung eines Wassertanks 1 einer Getränkemaschine, wie einer Kaffeemaschine, z.B. eines Kaffeevollautomaten nach dem Stand der Technik. Der Wassertank 1 umfasst einen Tankboden 2 und mit gestrichelten Linien teilweise dargestellten Wassertankseitenwänden 3. Eine Filterpatrone 4 mit einem Filtergehäuse 5 ist in den Wassertank 1 eingesetzt. Der Anschluss zwischen dem Tankboden 2 und der Filterpatrone 4 wird über Tankanschlusselemente 6 auf Seiten des Wassertanks und filterseitige Filteranschlusselemente 7 realisiert.

Die Filterpatrone 4 befindet sich im Innenraum 8 des Wassertanks 1, d. h. sie steht im Betrieb ganz oder teilweise in dem im Wassertank 1 bevorrateten Wasser. Ein Filteranschlussstutzen 9 des Wassertanks 1 für den Anschluss des Wassertanks 1 an die nicht dargestellte Getränkemaschine steht von der Unterseite des Wassertanks 1 ab.

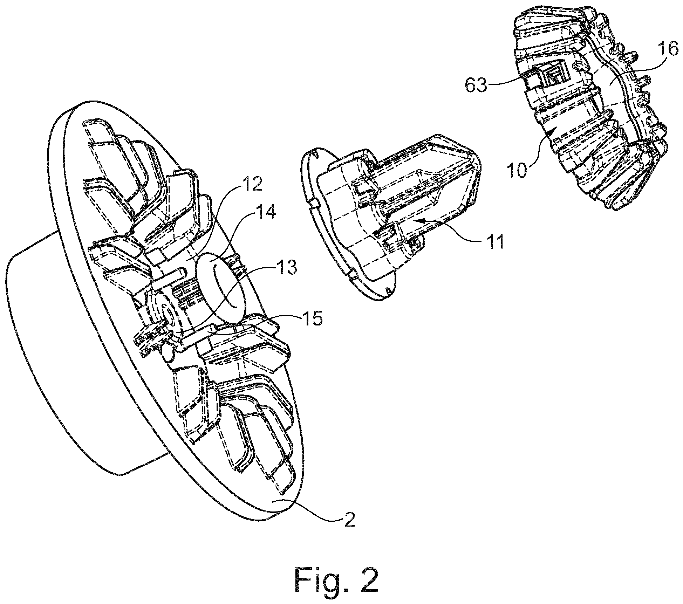

In Fig. 2 ist ein runder Ausschnitt des Tankbodens 2 dargestellt, wobei ein Befestigungsring 10 und ein Zentrierelement 11 zum Einlegen in eine Vertiefung 12 des Tankbodens 2 vorgesehen sind. Ein Tankventilkörper 13 mit einer als O-Ring ausgebildeten Dichtung 14, von dem zwei Pins 15 nach oben abstehen, ist ebenfalls in Fig. 2 zu sehen. Der Befestigungsring 10 trägt weiterhin eine Elastomerdichtung 16.

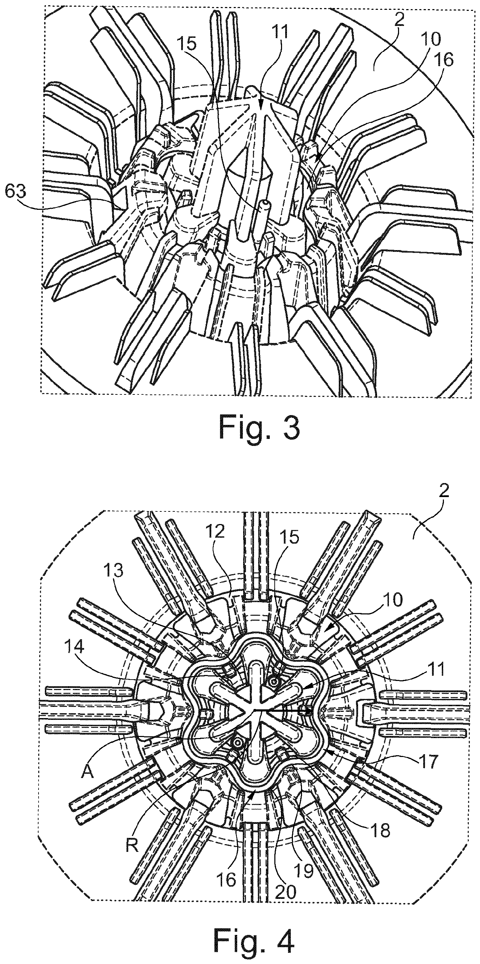

In der Fig. 3 und 4 sind der Befestigungsring 10 und das Zentrierelement 11 in den Tankboden 2 eingebaut. Hier ist erkennbar, dass die Pins 15 das Zentrierelement durchsetzen können und so Kodierelemente für die Kodierung des Wassertanks gegenüber dem zugehörigen Maschinenanschluss bilden, von dem beim Einsetzen des Wassertanks der Tankventilkörper 13 betätigt werden muss. Weiterhin ist in Fig.4 gut sichtbar, dass die die Wassertankdichtung 17 bildende Elastomerdichtung 16 eine Ringdichtung ist, die entlang ihrem Umfang gegenüber einer zentralen Achse A einen variierenden Radius R aufweist, so dass die eine Tankdichtfläche 18 bildende Innenfläche der Wassertankdichtung 17 radiale Einbuchtungen 19 und radiale Ausbuchtungen 20 umfasst. Die erste Tankdichtfläche 18 dient zugleich als erste Tankfixierfläche.

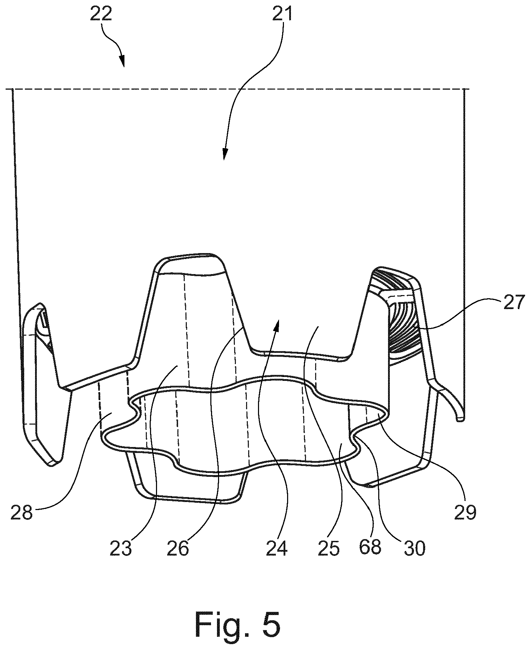

In Fig. 5 ist der Anschlussbereich 21 einer passenden Filterpatrone 22 gezeigt. Ein Filteranschlussstutzen 23 bildet einen inneren Ring der von einem äußeren Ring 24 mit axial verlaufenden Vorsprüngen 25 und Rücksprüngen 26 umgeben ist. Zwischen dem inneren Ring 23 und dem äußeren Ring 24 befindet sich ein ringförmiges Einlasssieb 27, durch das Wasser in die Filterpatrone gelangt. Die Außenfläche 28 und die Innenfläche 68 des Filteranschlussstutzens 23 sind passend zur Tankdichtfläche 18 ebenfalls mit Ausbuchtungen 29 und Einbuchtungen 30 versehen.

Die Außenfläche 28 und/oder die Innenfläche 68 des Filteranschlussstutzens 23 können zugleich als Filterfixierfläche dienen.

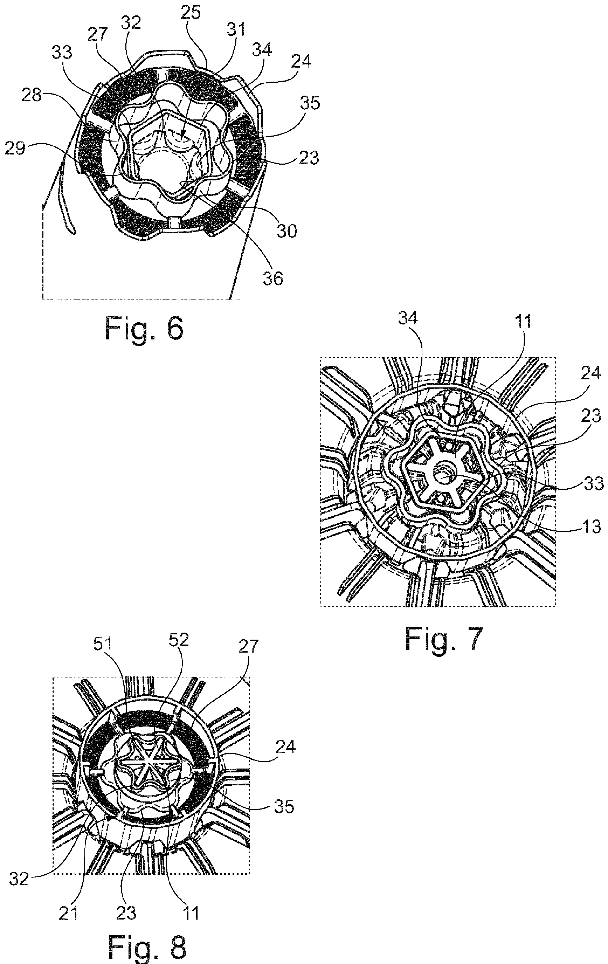

In der Ansicht von Fig. 6 ist neben den oben beschriebenen Teilen des Anschlussbereiches 21 der Filterpatrone 22 die besondere Ausgestaltung einer Führungsstruktur 31 der Filterpatrone 22 zur Aufnahme des Zentrierelementes 11 dargestellt. Die Führungsstruktur weist Führungsnuten 32 auf, die in Flucht zu den Kanten 33 eines Polygonringes 34, vorliegend beispielhaft mit sechs Führungsnuten in Flucht zu sechs Kanten eines sechskantförmigen Ringes liegen. In der Schnittdarstellung mit Blick von oben nach Fig. 7 geht die Schnittebene durch diesen Polygonring 34.

Nach oben in das Innere der Filterpatrone schließen sich Innenwölbungen 35 an die zwischen den Kanten 33 und den Führungsnuten 32 liegen. Die Innenwölbungen 35 bilden die seitlichen Wandungen 36 der Führungsnuten 32 aus. Durch diese gewölbte Form verjüngen sich die Wandungen 36 der Führungsnuten 32 sowohl in axialer Richtung nach oben hin (bezogen auf die Betriebsstellung) und in radiale Richtung von innen nach außen. In der Schnittstelle, mit Blick von oben gemäß Fig. 8 verläuft die Schnittebene auf einer Höhe, in der die Führungsnuten 32 deutlich ausgebildet sind. Zentral schließt sich innen eine Steigleitung 37 an, durch die das in die Filterpatrone 22 eintretenden Wasser nach oben zur Filterstrecke geleitet wird.

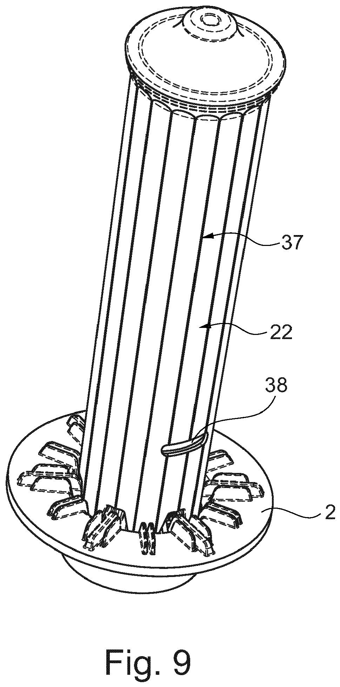

In Fig. 9 ist die gesamte Filterpatrone 22 dargestellt. In einem Filtergehäuse 37, das eine optionale seitliche Dosieröffnung 38 und den beschriebenen bodenseitigen Wasseranschluss aufweist. Die optionale Dosieröffnung 38 ist nur im Falle einer Ausführung der Filterpatrone vorgesehen, die für die Abgabe von Zusatzstoffen, z. B. Mineralien, Vitaminen oder dgl., aus einer im Filtergehäuse 37 untergebrachten Dosierkammer in den Wasservorrat ausgebildet ist. Da eine solche Dosierkammer innerhalb des Filtergehäuses 37 gegenüber der Filterstrecke geschlossen ist, hat diese keine weitere Bedeutung bezüglich der Filtration. Eine erfindungsgemäße Filterpatrone kann also ohne weiteres auch ohne diese Dosierkammer und deren Dosieröffnung 38 ausgebildet sein. In Fig. 9 ist insbesondere die Betriebsposition erkennbar, auf die sich die Angaben oben und unten in dieser Beschreibung beziehen.

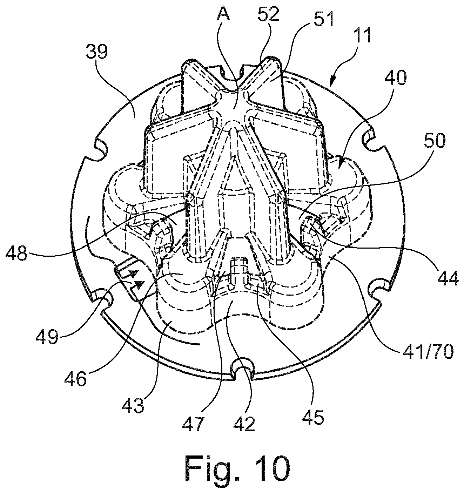

In Fig. 10 ist eine perspektivische Darstellung des Zentrierelementes 11 zu sehen. Das Zentrierelement ist mit einer Bodenplatte 39 versehen, die in montiertem Zustand in einer Aufnahme der Elastomerdichtung liegend diese randseitig hintergreift. Von der Bodenplatte 39 steht ein Zentrierdorn 40 nach oben ab, der eine ringförmige Außenfläche 41 aufweist, die auch eine zweite Tankfixierfläche bildet. Diese Außenfläche 41 weist einen entlang des Umfangs variierenden Radius gegenüber der zentralen Achse A auf, so dass auch diese Außenfläche 41 radiale Einbuchtungen 42 und Ausbuchtungen 43 umfasst. Die Außenfläche 41 ist so an eine entsprechende Form des Filteranschlussstutzens 9 angepasst.

Zur weiteren Anpassung sind auch die Einbuchtungen 42 und Ausbuchtungen 43 dieser Außenfläche 41 periodisch um eine Kreislinie oszillierend ausgebildet und weisen einen runden Verlauf auf. In der dargestellten Ausführung sind entsprechend der Gestaltung der dargestellten Ausführung der Filterpatrone 22 sechs Einbuchtungen 42 und sechs Ausbuchtungen 43 entlang einer Kreislinie mit einem Durchmesser kleiner 3 cm vorgesehen. Bei einer anderen Filterpatrone ist die Anpassung der Außenfläche 41 bzw. der zweiten Tankfixierfläche entsprechend passend abzuändern.

Alle Anpassungen der Außenfläche 41 des Zentrierdorns 11 führen dazu, dass in eingebautem Zustand nur ein ringförmiger Schlitz zwischen der Außenfläche 41 und der Elastomerdichtung 16 zum Einführen des Filteranschlussstutzens 23 offen ist. Dadurch ergibt sich eine weitere Kodierung gegen die Verwendung einer nicht geeigneten Filterpatrone. Zudem ist auf diese Weise eine Abstützung des Filteranschlussstutzens 23 auf dessen Innenseite an der Außenfläche 41 des Zentrierdorns 11 möglich. So kann um der Anpressdruck des Filteranschlussstutzens auf die Elastomerdichtung 16 über die variierende Form entlang der gesamten Umfangsform gleichmäßig erhöht werden.

Oberhalb der ringförmigen Außenfläche ist wenigstens ein nach oben abstehender Zahn 44 vorgesehen. Der eine oder die mehrere Zähne 44 sind auf einer Abstufung 45 des Zentrierdorns 40 angebracht. Weitere, der Form der Außenfläche 41 folgende Erhöhungen 46 gegen über der Abstufung 45 sind mit einem Abstand zu den Zähnen 44 angebracht, so dass zwischen den Zähnen und den Erhöhungen 46 eine Lücke 47 verbleibt. Der Zahn oder die Zähne 44 und/oder die Erhöhungen 46 können den Einsatz einer axialen Dichtung zur Umgehung der Kodierung verhindern. Oberhalb der Außenfläche 41 ist weiterhin eine Durchlassöffnung 48 vorgesehen, die in montiertem Zustand des Zentrierelementes 11 zu einer Tankdurchlassöffnung führt. Durch diese Durchlassöffnung 48 kann das filtrierte Wasser einer Filterpatrone 22 aus dem Wassertank abgeführt werden.

Eine oder mehrere Bodendurchlassöffnungen 49 sind unterhalb der Außenfläche 41 in der Bodenplatte 39 vorgesehen. Durch diese Bodenöffnungen kann ungefiltertes Wasser aus dem Wassertank geleitet werden. Unterhalb der Erhöhungen 46 und innerhalb der die Außenfläche 41 tragenden Wand ergibt sich ein Hohlraum 50 für die Aufnahme des Tankventilkörpers 13.

Oberhalb der ringförmigen Außenfläche 41 sind Führungsrippen 51 vorgesehen, die an ihrer Oberseite wie im dargestellten Ausführungsbeispiel abgeschrägt sein können. Die so gebildeten Führungsschrägen 52 helfen beim Einführen der Führungsrippen 51 in die Führungsnuten 32 einer Filterpatrone 22. In der Schnittdarstellung nach Fig. 4 sind die Führungsschrägen 52 der Führungsrippen 51 in der aufgesteckten Filterpatrone 22 gut zu erkennen.

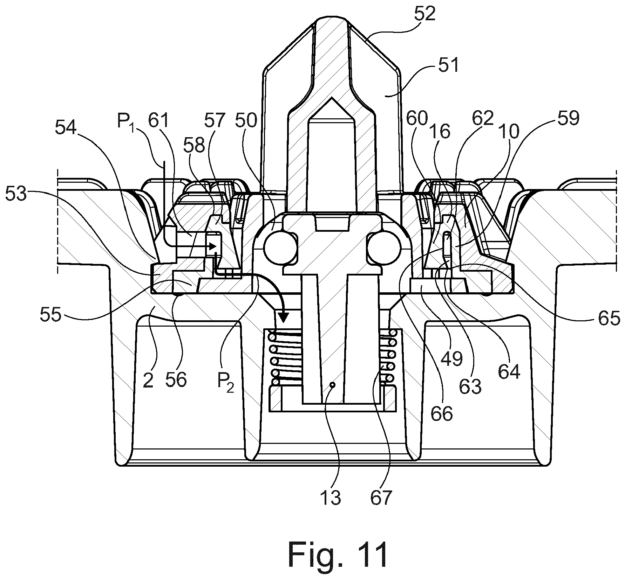

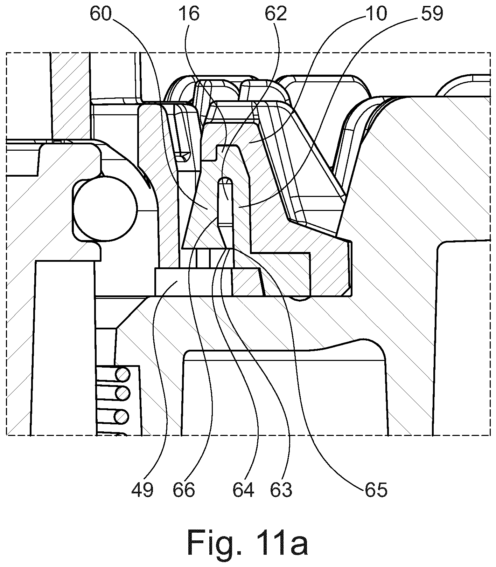

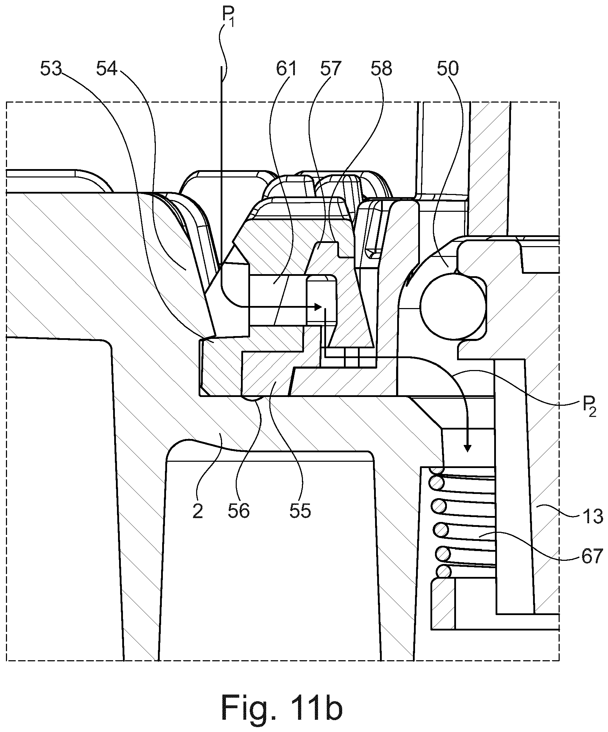

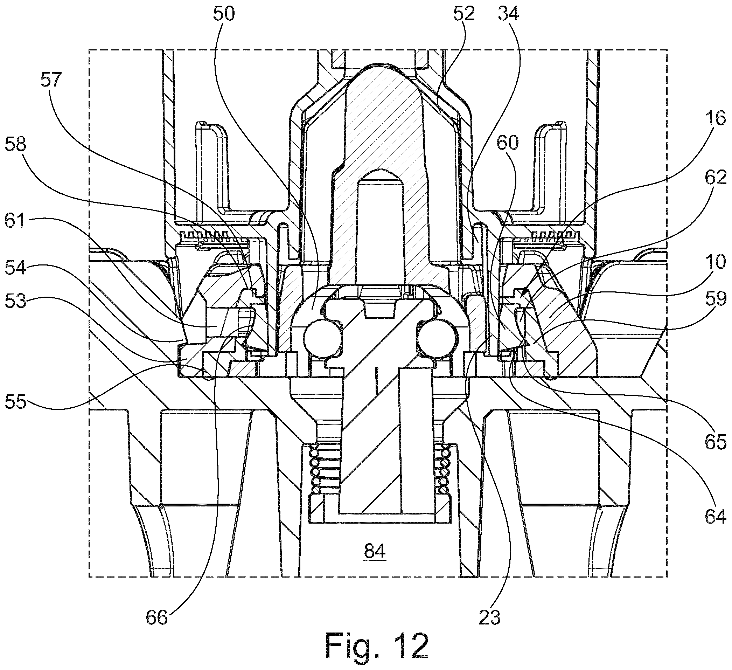

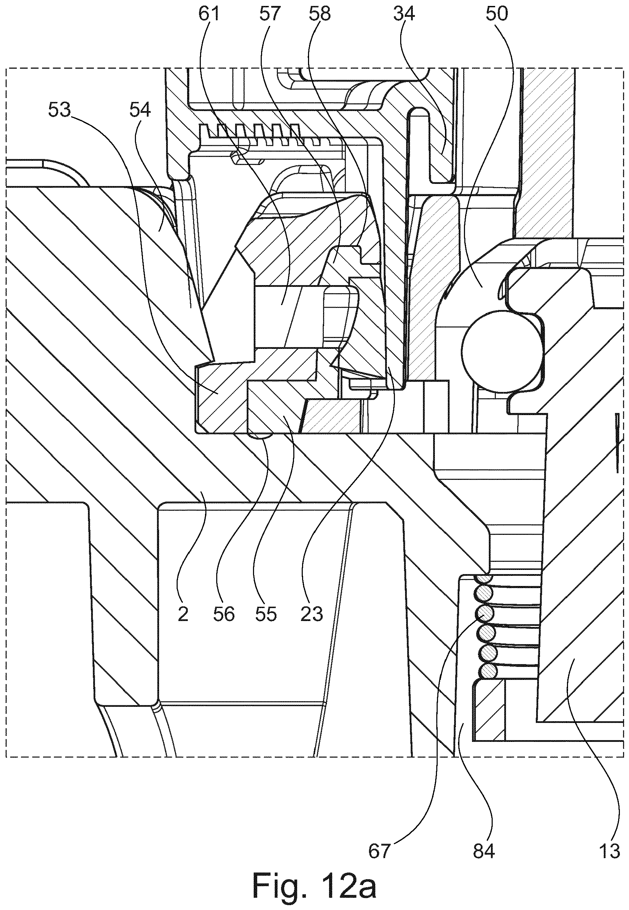

In den Fig. 11, 11a, 11b, 12 und 12a sind die zusammengebauten Bauteile des Wassertanks 1 für den Anschluss einer Filterpatrone ohne und mit Filterpatrone 22 dargestellt. Der Befestigungsring 10 ist mit einem Rastvorsprung 53 versehen, mit dem er am Tankboden 2 verrasten kann, indem er eine Bodenrippe 54 des Wassertanks hintergreift. Die Elastomerdichtung 16 hat einen Bodenabschnitt 55, der den Befestigungsring 10 untergreift und so die Elastomerdichtung 16 mit dem Befestigungsring 10 am Tankboden 2 hält.

Für die Abdichtung gegenüber dem Tankboden 2 weist die Elastomerdichtung 16 eine Dichtfläche auf, die vorliegend durch einen Dichtwulst 56 realisiert ist. Für den dichten Abschluss der Elastomerdichtung 16 gegenüber dem Befestigungsring 10 kann eine umlaufende Dichtfläche an verschiedenen Stellen vorgesehen werden. Im dargestellten Ausführungsbeispiel ist eine oben an der Elastomerdichtung 16 angeformte Ringdichtung 57 vorgesehen, die in einer Dichtnut 58 des Befestigungsrings mit diesem dichtet.

Die Elastomerdichtung 16 umfasst einen Außenring 59 und einen Innenring 60, die einstückig miteinander ausgeformt und verbunden sind. Der Außenring 59 und der Innenring 60 folgen beide in ihrer Form entlang dem Umfang dem variierenden Radius des Befestigungsrings 10, des Filteranschlussstutzens 23 und der Elastomerdichtung 16 und den dadurch gebildeten Einbuchtungen und Ausbuchtungen. Der Außenring 59 ist abgestuft und trägt die Ringdichtung 57 sowie den Dichtwulst 56. Der Außenring 59 ist weiterhin mit einer oder mehreren Bypassöffnungen 61 versehen, durch die ungefiltertes Wasser in Fließrichtung P1 in den Ringspalt 62 zwischen dem Außenring 59 und dem Innenring 60 gelangen kann. Die Bypassöffnung 61 der Elastomerdichtung 16 liegt in montiertem Zustand unmittelbar im Anschluss an eine Bypassöffnung 63 im Befestigungsring 11, die z.B. auch in den Fig. 1 und 3 zu sehen ist. Durch die Bypassöffnung 63 kann in Richtung P2 ungefiltertes Wasser aus dem Ringspalt 62 aus dem Wassertank 1 in die entsprechende Getränkemaschine fließen.

Der Innenring 60 weist an seiner Unterseite eine Dichtlippe 64 auf, der am Außenring 59 eine Dichtfläche 65 gegenüberliegt. Im entspannten Zustand der Elastomerdichtung 16 ist der Ringspalt 62 zwischen dem Außenring 59 und dem Innenring 60 unten offen, wie in Fig. 11 zu sehen ist, so dass das im Bypass geführte ungefilterte Wasser aus dem Ringspalt 62 in Fließrichtung P2 abfließen kann. In diesem Zustand ist die Innenseite 66 des Innenrings 60, die die Wassertankdichtung 17 bildet, im Verlauf nach unten nach innen abgeschrägt. Die Ausgestaltung des Bypasses ist in den Vergrößerungen gemäß den Fig. 11a und b hervorgehoben.

Beim Einsetzen einer Filterpatrone 22 mit dem Filteranschlussstutzen 23 wird die Elastomerdichtung 16 verformt, so dass die Innenseite 66 nach außen gedrückt wird und im Wesentlichen senkrecht entlang dem Filteranschlussstutzen verläuft. Dabei wird die Dichtlippe 64 auf die gegenüberliegende Dichtfläche 65 gedrückt und somit der Ringspalt 62 und damit auch der Bypass durch die Bypassöffnungen 61, 63 geschlossen. Durch die Verformung wird ein Anpressdruck erzeugt, der die Tankdichtfläche 17 an die Filterdichtfläche 28 und zugleich die Dichtlippe 64 auf die Dichtfläche 65 drückt. Dieser Zustand ist in Fig. 12 und Fig. 12a gezeigt.

Der Tankventilkörper 13 ist sowohl in Fig. 11 als auch in Fig. 12 durch einen nicht näher gezeigten Anschlag der zugehörigen Maschine gegen eine Rückstellfeder 67 in den Hohlraum 50 angehoben und so in der geöffneten Stellung, die dem eingesetzten Wassertank entspricht. Wird der Wassertank aus der Maschine entfernt, schließt der Tankventilkörper 13 unter dem Druck der Rückstellfeder 67.

Die Tankdichtfläche 18 wird durch die Innenseite 66 der Elastomerdichtung 16 gebildet und stellt zugleich eine erste Tankfixierfläche 18 dar. An dieser Seite liegt wie bereist o.a. eine durch die Filterdichtfläche 28 gebildete erste Filterfixierfläche 28 im eingesteckten Zustand der Filterpatrone 5,22 unter einem Anpressdruck an, der die Elastomerdichtung 16 so verformt, dass ein fixierender und dichtender Formschluss zustande kommt.

An der die zweite Tankfixierfläche bildenden Außenfläche 41 liegt dabei eine zweite Filterfixierfläche 68 (s. Fig. 5) an, die durch die Innenfläche des Filteranschlussstutzens 23 gebildet wird. Dieser Formschluss wird ebenfalls unter einem Anpressdruck ausgebildet. Durch die erfindungsgemäße Formgebung des Filteranschlussstutzens 23 bildet dieser eine ringförmige Wand 69 aus, die bei Bedarf federnd geweitet werden kann. Dadurch ergibt sich die Möglichkeit eines Toleranzausgleiches bei einer guten Fixierung, die durch die entsprechende Verspannung bewirkt wird. Durch die beiderseitige parallele oder zueinander geneigte Formgebung der ersten Filterfixierfläche 28 und einer zweiten Filterfixierfläche 68 bildet die dazwischen liegende ringförmige, gewellte Wand 69 des Anschlussstutzens 23 eine gewellte Ringfeder 70. Die zweite Filterfixierfläche 68 kann dabei auch als zweite Filterdichtfläche wirken.

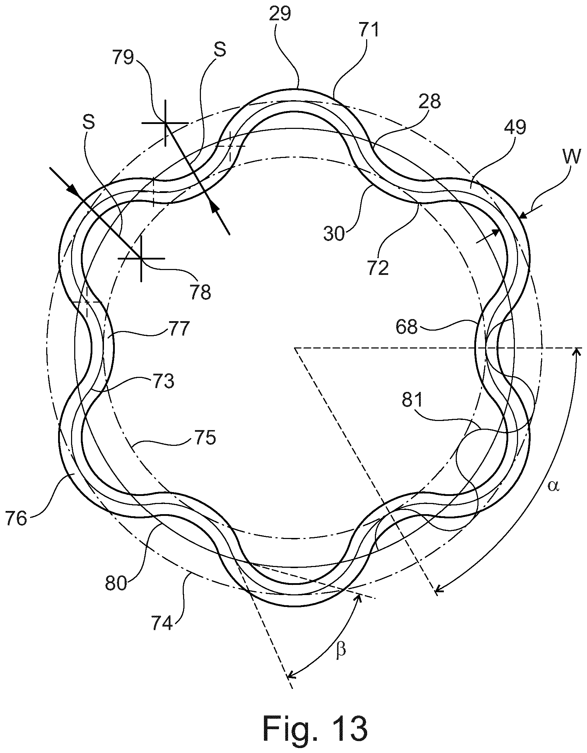

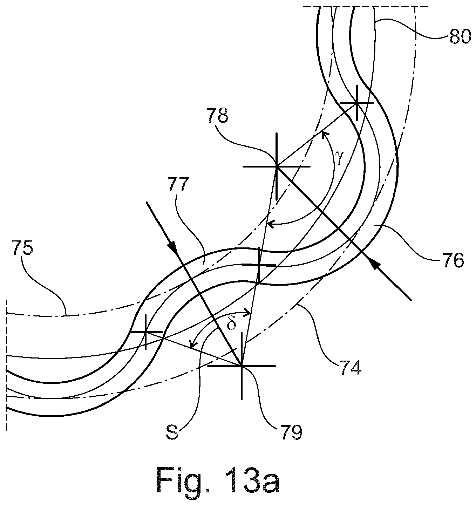

Der Filteranschlussstutzen gemäß der Stirnansicht Fig. 13 sowie der Ausschnittvergrößerung gemäß Fig. 13a zeigt die beschriebene Wellenform mit Ausbuchtungen 29 und Einbuchtungen 30. Die ringförmige Wand 69 des Filteranschlussstutzens 23 mit einer Wandstärke W weist an der Wandaußenseite 71 die erste Filterfixierfläche 28 und auf der Wandinnenseite 72 die zweite Filterfixierfläche 68 auf. Die Wandaußenseite 71 und die Wandinnenseite 72 verlaufen in der dargestellten Ansicht parallel, sind jedoch in axialer Richtung zueinander hin abgeschrägt, was weiter unten noch erläutert wird. Die Wellenform wird daher anhand einer gestrichelt dargestellten Mittellinie 73 weiter veranschaulicht.

Die Mittellinie 73 verläuft wellenförmig zwischen einem äußeren Hüllkreis 74 dessen Radius den größten Wert des variierenden Radius aufweist, und einem inneren Hüllkreis 75, dessen Radius den kleinsten Radius des variierenden Radius der Wellenform aufweist. Die Ausbuchtungen 29 und Einbuchtungen 30 der Mittelinie 73 bilden Wellenberge in der Form konvexer Kreissegmente 76 und Wellentäler in der Form konkaver Kreissegmente 77. In der dargestellten Ausführung zeigen alle Kreissegmente 76, 77 den gleichen Segmentradius S. Die Mittelpunkte 78, 79 der Kreissegmente 76, 77 liegen für die konvexen Kreissegmente 76 innerhalb des inneren Hüllkreises 75 und für die konkaven Kreissegmente 77 außerhalb des äußeren Hüllkreises 74. Die konvexen Kreissegmente 76 und die konkaven Kreissegmente 77 gehen tangential ineinander über und sind gleichmäßig über den Umfang verteilt, so dass sich eine drehsymmetrische Form ergibt. Im dargestellten Ausführungsbeispiel sind jeweils sechs konvexe Kreissegmente 76 und sechs konkave Kreissegmente 77 vorgesehen, die alternierend in einem Winkelabstand von 30° liegen, d.h. die konvexen Kreissegmente 76 liegen zueinander um einen Winkel α von 60° auseinander und die konkaven Kreissegmente 77 ebenso.

Durch die Wahl des Segmentradius und die damit einhergehende Position der zugehörigen Mittelpunkte 78, 79 verläuft die Mittelinie vergleichsweise flach gewölbt, wellenförmig um die Mittelkreislinie 80 herum. Die Mittellinie 73 schneidet die Mittelkreislinie 80 unter einem stumpfen Winkel β. Hierdurch ist die Bogenlänge der Ausbuchtungen 29 deutlich länger als die Bogenlänge der Einbuchtungen 30, wodurch der von dem Segmentbogen der Ausbuchtungen 29 überstrichene Winkel γ deutlich größer ist als der von den Einbuchtungen 30 überstrichene Winkel δ. Diese Form verbessert die Federwirkung des Filteranschlussstutzens 23.

Zum Vergleich sind in der Zeichnung noch Kreissegmente 81 dargestellt, deren Segmentmittelpunkte 82 direkt auf der Mittellinie 73 liegen. Dieser in dieser Ausführungsform nicht realisierte Verlauf weist deutlich kleinere Segmentradien und einen im Wesentlichen senkrechten Verlauf zur Mittellinie 73 auf.

Eine gute Federwirkung hat sich bei Radien und Wandstärken gezeigt, bei denen der Radius des inneren Hüllkreises 75 zwischen 5% und 15% des Radius des äußeren Hüllkreises 74 und der Radius der konvexen und/oder konkaven Kreissegmente zwischen 20% und 35% des Radius des äußeren Hüllkreises 74 liegt. Die Wandstärke W zwischen der Wandaußenseite 71 und der hierzu (bezogen auf die Betriebsposition) parallel oder geneigt verlaufenden Wandinnenseite 72 liegt bevorzugt zwischen 5% und 15% des Radius des äußeren Hüllkreises 74.

Im dargestellten Beispiel weist der äußere Hüllkreis 74 einen Radius von ca. 11 mm und der innere Hüllkreis 75 einen Radius von ca. 9,75 mm auf. Dabei beträgt der Segmentradius der konvexen und konkaven Kreissegmente ca. 3,08 mm und die Wandstärke zwischen der Wandaußenseite 71 und der hierzu parallel oder geneigt verlaufenden Wandinnenseite 72 ca. 0,9 mm.

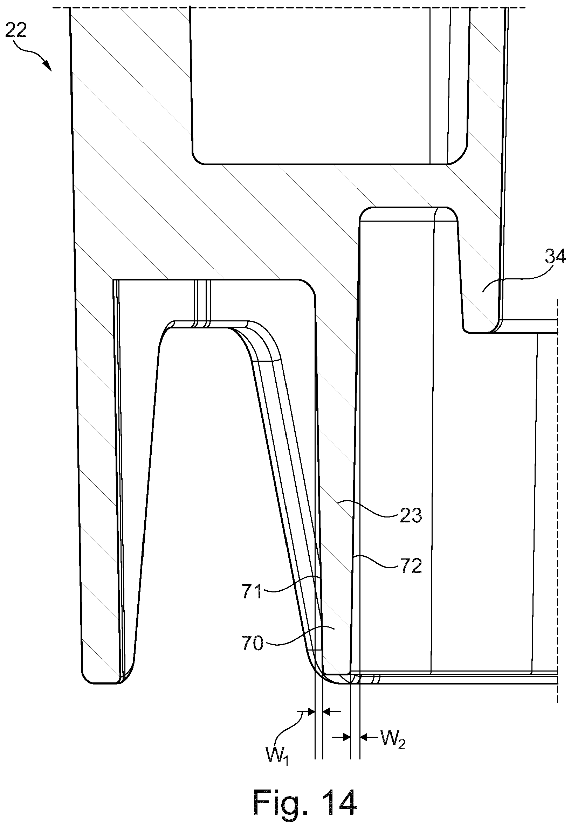

In Fig. 14 ist zu erkennen, dass die Außen 71 - und/oder die Innenwand 72 des Filteranschlussstutzens 23, die je nach Ausführungsform auch eine oder zwei Filterdichtflächen 28 bilden, gegenüber der Vertikalen um die Winkel ω1 oder ω2 abgeschrägt sind, so dass sie bezogen auf die Betriebsposition der Filterpatrone 4, 22 von oben nach unten zusammenlaufen. Diese Abschrägung oder Abschrägungen um den oder die Winkel ω1 und/oder ω2 bilden eine Einführhilfe beim Einführen des Anschlussstutzens 23 in den Ringspalt zwischen der Elastomerdichtung 16 und der Außenfläche 41 des Wassertanks 1.

### Bezugszeichenliste:

- 1: Wassertank
- 2: Tankboden
- 3: Wassertankseitenwand
- 4: Filterpatrone
- 5: Filtergehäuse
- 6: Tankanschlusselement
- 7: Filteranschluss
- 8: Innenraum
- 9: Filteranschlussstutzen
- 10: Befestigungsring
- 11: Zentrierelement
- 12: Vertiefung
- 13: Tankventilkörper
- 14: Dichtung
- 15: Pin
- 16: Elastomerdichtung
- 17: Wassertankdichtung/Ringdichtung
- 18: Tankdichtfläche
- 19: Einbuchtung
- 20: Ausbuchtung
- 21: Anschlussbereich
- 22: Filterpatrone
- 23: Filteranschlussstutzen/innerer Ring
- 24: Äußerer Ring
- 25: Vorsprung
- 26: Rücksprung
- 27: Einlasssieb
- 28: Filterdichtfläche/Außenfläche
- 29: Ausbuchtung
- 30: Einbuchtung
- 31: Führungsstruktur
- 32: Führungsnut
- 33: Kante
- 34: Polygonring
- 35: Innenwölbung
- 36: Wandung
- 37: Filtergehäuse
- 38: Dosieröffnung
- 39: Bodenplatte
- 40: Zentrierdorn
- 41: Außenfläche
- 42: Einbuchtung
- 43: Ausbuchtung
- 44: Zahn
- 45: Abstufung
- 46: Erhöhung
- 47: Lücke
- 48: Durchlassöffnung
- 49: Bodendurchlassöffnung
- 50: Hohlraum
- 51: Führungsrippe
- 52: Führungsschräge
- 53: Rastvorsprung
- 54: Bodenrippe
- 55: Bodenabschnitt
- 56: Dichtwulst
- 57: Ringdichtung
- 58: Dichtnut
- 59: Innenring
- 60: Außenring
- 61: Bypassöffnung
- 62: Ringspalt
- 63: Bypassöffnung
- 64: Dichtlippe
- 65: Dichtfläche
- 66: Innenseite
- 67: Rückstellfeder
- 68: Zweite Filterfixierfläche/Innenfläche
- 69: Wand
- 70: Ringfeder
- 71: Wandaußenseite
- 72: Wandinnenseite
- 73: Mittellinie
- 74: Äußerer Hüllkreis
- 75: Innerer Hüllkreis
- 76: Konvexes Kreissegment
- 77: Konkaves Kreissegment
- 78: Mittelpunkt
- 79: Mittelpunkt
- 80: Mittelkreislinie
- 81: Kreissegment
- 82: Segmentmittelpunkt
- 83: Wendepunkt
- 84: Tankdurchgangsöffnung

- A: Achse
- W: Wandstärke
- S: Segmentradius
- P1: Fließrichtung
- P2: Fließrichtung

## Patentansprüche

1. Filterpatrone (22) für eine Haushaltsmaschine, die mit einem Filtergehäuse (37) versehen ist, dessen Wandung eine Gehäuseinnenseite von einer Gehäuseaußenseite trennt, wobei eine im Betrieb der Filterpatrone (22) gegenüber der äußeren Umgebung des Filtergehäuses (37) offenen Filtereinlassöffnung (27) vorgesehen ist, wobei bezogen auf die Strömungsrichtung im Betrieb im Anschluss an die Filtereinlassöffnung (27) eine Vorrichtung zur Wasserleitung im Inneren des Filtergehäuses (37) vorgesehen ist, die wenigstens eine, wenigstens ein Filtermedium aufweisende Filterkammer umfasst und in einer Filterauslassöffnung zum Absaugen von Wasser aus der Filterpatrone (22) endet, und wobei ein Filteranschlusselement mit einem ringförmigen Filteranschlussstutzen (23) vorgesehen ist, der eine ringförmige Filterfixierfläche (28) für den dichten Anschluss der Filterpatrone (22) an einer Tankfixierfläche im Wassertank aufweist,
**dadurch gekennzeichnet, dass**
der Verlauf der ersten Filterfixierfläche (28) entlang dem Umfang des ringförmigen Filteranschlussstutzens (23) einen variierenden Radius gegenüber einer zentralen Achse aufweist, so dass die erste Filterfixierfläche (28) radiale Ausbuchtungen (29) und/oder radiale Einbuchtungen (30) umfasst, wobei die Ausbuchtungen (29) und/oder Einbuchtungen (30) einen runden Verlauf aufweisen und dass die Ausbuchtungen (29) und Einbuchtungen (30) eine Wellenform entlang einer Kreislinie (80) bilden, wobei die Wellenform aus einer alternierenden Abfolge von konvexen, die Ausbuchtungen bildenden Kreissegmenten (76) und konkaven, die Einbuchtungen bildenden Kreissegmenten (77) besteht.

2. Filterpatrone nach Anspruch 1, **dadurch gekennzeichnet, dass** die Filterfixierfläche (28) zugleich als Filterdichtfläche vorgesehen ist.

3. Filterpatrone nach einem der vorgenannten Ansprüche, **dadurch gekennzeichnet, dass** der die Filterfixierfläche (28) aufweisende ringförmige Filteranschlussstutzen (23) des Filteranschlusselementes wenigstens im Bereich der Filterfixierfläche (28) eine Wand (69) mit einer parallel zu einer Wandinnenseite(72) verlaufenden, die Filterfixierfläche (28) umfassende oder bildende Wandaußenseite (71) aufweist.

4. Filterpatrone nach einem der vorgenannten Ansprüche **dadurch gekennzeichnet, dass** die Anordnung der radialen Ausbuchtungen (29) und radialen Einbuchtungen (30) der Filterfixierfläche (28) drehsymmetrisch über den Umfang ausgebildet ist.

5. Filterpatrone nach einem der vorgenannten Ansprüche **dadurch gekennzeichnet, dass** die Anordnung der Ausbuchtungen (29) und Einbuchtungen (30) der Filterfixierfläche (28) mit gleichen Winkeln über den Umfang ausgebildet ist.

6. Filterpatrone nach einem der vorgenannten Ansprüche **dadurch gekennzeichnet, dass** die konkaven und konvexen Kreissegmente (76, 77) in Wendepunkten beim Übergang zwischen konkaven und konvexen Krümmungen tangential verbunden sind.

7. Filterpatrone nach einem der vorgenannten Ansprüche **dadurch gekennzeichnet, dass** die Bogenlänge der konvexen Kreissegmente (76) länger ist, als die Bogenlänge der konkaven Kreissegmente (77).

8. Filterpatrone nach einem der vorgenannten Ansprüche **dadurch gekennzeichnet, dass** die konvexen und die konkaven Kreissegmente (76, 77) den gleichen Segmentradius S aufweisen.

9. Filterpatrone nach einem der vorgenannten Ansprüche **dadurch gekennzeichnet, dass** die konvexen und die konkaven Kreissegmente (76, 77) innerhalb eines äußeren Hüllkreises (74) und außerhalb eines inneren Hüllkreises (75) liegen, wobei die Kreismittelpunkte (78) der konvexen Kreissegmente (76) innerhalb des inneren Hüllkreises (75) und die Kreismittelpunkte (79) der konkaven Kreissegmente (77) außerhalb des äußeren Hüllkreises (74) liegen.

10. Filterpatrone nach einem der vorgenannten Ansprüche **dadurch gekennzeichnet, dass** der Radius des inneren Hüllkreises (75) zwischen 5% und 15% des Radius des äußeren Hüllkreises (74) beträgt.

11. Filterpatrone nach einem der vorgenannten Ansprüche **dadurch gekennzeichnet, dass** der Radius der konvexen und/oder konkaven Kreissegmente (76, 77) zwischen 20% und 35% des Radius des äußeren Hüllkreises (74) beträgt.

12. Filterpatrone nach einem der vorgenannten Ansprüche **dadurch gekennzeichnet, dass** die Wandstärke (W) zwischen den parallel zur Wandaußenseite (71)verlaufenden Wandinnenseite (72) zwischen 5% und 15% des Radius des äußeren Hüllkreises (74) beträgt.

13. Filterpatrone nach einem der vorgenannten Ansprüche **dadurch gekennzeichnet, dass** die Wendepunkte (83) der Krümmung der Kreissegmente (76, 77)näher an dem inneren Hüllkreis (75) als an dem äußeren Hüllkreis (74) liegen.

14. Filterpatrone nach einem der vorgenannten Ansprüche **dadurch gekennzeichnet, dass** der die Filterfixierfläche (28) aufweisende ringförmige Filteranschlussstutzen (23) des Filteranschlusselementes wenigstens im Bereich wenigstens der als Filterdichtfläche vorgesehenen Filterfixierfläche (28) aus einem bei Betriebstemperatur gegenüber einem Elastomer formfesteren Kunststoff besteht.

15. Filterpatrone (22) nach einem der vorgenannten Ansprüche **dadurch gekennzeichnet, dass** der ringförmige Filteranschlussstutzen (23) des Filteranschlusselementes eine Außen 71 - und/oder eine Innenwand 72 aufweist, die, bezogen auf die Betriebsposition der Filterpatrone, gegenüber der Vertikalen um einen Winkel ω1 und/oder ω2 abgeschrägt sind, so dass die Außenwand 71 und die Innenwand 72 der Filterpatrone zueinander geneigt von oben nach unten zusammenlaufen.

16. Filterpatrone (22) nach einem der vorgenannten Ansprüche **dadurch gekennzeichnet, dass** die abgeschrägte Außenwand 71 eine äußere (28) und/oder die abgeschrägte Innenwand 72 eine innere Filterfixierfläche aufweist.

## Claims

1. Filter cartridge (22) for a household appliance, which is provided with a filter housing (37), the wall of which separates a housing internal side from a housing external side, wherein a filter inlet opening (27) which in the operation of the filter cartridge (22) is open in relation to the external environment of the filter housing (37) is provided, wherein a device for water conduction which comprises at least one filter chamber having at least one filter medium and terminates in a filter outlet opening for suctioning water from the filter cartridge (22) is provided in the interior of the filter housing (37) downstream of the filter inlet opening (27) relative to the flow direction during operation, and wherein a filter connection element having an annular filter port (23) which has an annular filter fixing face (28) for the tight connection of the filter cartridge (22) to a tank fixing face in the water tank is provided,
**characterized in that**
the profile of the first filter fixing face (28) along the circumference of the annular filter port (23) has a variable radius in relation to a central axis, so that the first filter fixing face (28) comprises radial convexities (29) and/or radial concavities (30), wherein the convexities (29) and/or concavities (30) have a round profile and **in that** the convexities (29) and concavities (30) form a wave shape along a circular line (80), wherein the wave shape is composed of an alternating sequence of convex circle segments (76), forming the convexities, and concave circle segments (77), forming the concavities.

2. Filter cartridge according to Claim 1, **characterized in that** the filter fixing face (28) is simultaneously provided as a filter sealing face.

3. Filter cartridge according to one of the preceding claims, **characterized in that** the annular filter port (23) of the filter connection element, which has the filter fixing face (28), at least in the region of the filter fixing face (28) has a wall (69) having a wall external side (71) that runs parallel to a wall internal side (72) and comprises or forms the filter fixing face (28) .

4. Filter cartridge according to one of the preceding claims, **characterized in that** the arrangement of the radial convexities (29) and radial concavities (30) of the filter fixing face (28) is configured so as to be rotationally symmetrical over the circumference.

5. Filter cartridge according to one of the preceding claims, **characterized in that** the arrangement of the convexities (29) and concavities (30) of the filter fixing face (28) is configured with the same angles over the circumference.

6. Filter cartridge according to one of the preceding claims, **characterized in that** the concave and convex circle segments (76, 77) are connected tangentially at turning points at the transition between concave and convex curvatures.

7. Filter cartridge according to one of the preceding claims, **characterized in that** the arc length of the convex circle segments (76) is longer than the arc length of the concave circle segments (77).

8. Filter cartridge according to one of the preceding claims, **characterized in that** the convex and the concave circle segments (76, 77) have the same segment radius S.

9. Filter cartridge according to one of the preceding claims, **characterized in that** the convex and the concave circle segments (76, 77) lie within an outer envelope circle (74) and outside an inner envelope circle (75), wherein the circle centers (78) of the convex circle segments (76) lie within the inner envelope circle (75), and the circle centers (79) of the concave circle segments (77) lie outside the outer envelope circle (74).

10. Filter cartridge according to one of the preceding claims, **characterized in that** the radius of the inner envelope circle (75) is between 5% and 15% of the radius of the outer envelope circle (74).

11. Filter cartridge according to one of the preceding claims, **characterized in that** the radius of the convex and/or concave circle segments (76, 77) is between 20% and 35% of the radius of the outer envelope circle (74).

12. Filter cartridge according to one of the preceding claims, **characterized in that** the wall thickness (W) between the wall internal side (72) running parallel to the wall external side (71) is between 5% and 15% of the radius of the outer envelope circle (74).

13. Filter cartridge according to one of the preceding claims, **characterized in that** the turning points (83) of the curvature of the circle segments (76, 77) are closer to the inner envelope circle (75) than to the outer envelope circle (74).

14. Filter cartridge according to one of the preceding claims, **characterized in that** the annular filter port (23) of the filter connection element, which has the filter fixing face (28), at least in the region at least of the filter fixing face (28) provided as the filter sealing face is composed of a plastics material which is more dimensionally stable in comparison to an elastomer at operating temperature.

15. Filter cartridge (22) according to one of the preceding claims, **characterized in that** the annular filter port (23) of the filter connection element has an external wall (71) and/or an internal wall (72) which, in relation to the operating position of the filter cartridge, is/are beveled at an angle ω1 and/or ω2 to the vertical so that the external wall (71) and the internal wall (72) of the filter cartridge converge from top to bottom in a manner inclined to one another.

16. Filter cartridge (22) according to one of the preceding claims, **characterized in that** the beveled external wall (71) has an outer (28) and/or the beveled internal wall (72) has an inner filter fixing face.

## Revendications

1. Cartouche filtrante (22) pour un appareil ménager, qui est pourvue d'un boîtier de filtre (37) dont la paroi sépare un côté intérieur du boîtier d'un côté extérieur du boîtier, une ouverture d'entrée de filtre (27) ouverte par rapport à l'environnement extérieur du boîtier de filtre (37) étant prévue pendant le fonctionnement de la cartouche filtrante (22), un dispositif pour un acheminement d'eau étant prévu à l'intérieur du boîtier de filtre (37), en fonction du sens d'écoulement pendant le fonctionnement, à la suite de l'ouverture d'entrée de filtre (27), qui comprend au moins une chambre de filtration présentant au moins un milieu filtrant et se termine par une ouverture de sortie de filtre pour l'aspiration de l'eau hors la cartouche filtrante (22), et un élément de raccordement de filtre avec une tubulure annulaire (23) de raccordement de filtre étant prévu, qui présente une surface annulaire (28) de fixation de filtre pour le raccordement étanche de la cartouche filtrante (22) à une surface de fixation de réservoir existant dans le réservoir d'eau,
**caractérisée en ce que**
la forme de la première surface (28) de fixation de filtre le long de la périphérie de la tubulure annulaire (23) de raccordement de filtre présente un rayon variable par rapport à un axe central, de sorte que la première surface (28) de fixation de filtre comprend des renflements radiaux (29) et/ou des renfoncements radiaux (30), les renflements (29) et/ou les renfoncements radiaux (30) présentant une forme circulaire, et **en ce que** les renflements (29) et les renfoncements (30) constituent une forme ondulée le long d'une ligne circulaire (80), la forme ondulée étant constituée d'une succession alternée de segments de cercle convexes (76) formant les renflements et de segments de cercle concaves (77) formant les renfoncements.

2. Cartouche filtrante selon la revendication 1, **caractérisée en ce que** la surface (28) de fixation de filtre est également prévue en tant que surface d'étanchéité de filtre.

3. Cartouche filtrante selon l'une des revendications précédentes, **caractérisée en ce que** la tubulure annulaire (23) de raccordement de filtre de l'élément de raccordement de filtre présentant la surface (28) de fixation de filtre présente, au moins dans la zone de la surface (28) de fixation de filtre, une paroi (69) avec une face extérieure de paroi (71) s'étendant parallèlement à une face intérieure de paroi (72), entourant ou formant la surface (28) de fixation de filtre.

4. Cartouche filtrante selon l'une des revendications précédentes, **caractérisée en ce que** la disposition des renflements radiaux (29) et des renfoncements radiaux (30) de la surface (28) de fixation de filtre est réalisée avec une symétrie de révolution sur la périphérie.

5. Cartouche filtrante selon l'une des revendications précédentes, **caractérisée en ce que** la disposition des renflements (29) et des renfoncements (30) de la surface (28) de fixation de filtre est réalisée avec des angles égaux sur la circonférence.

6. Cartouche filtrante selon l'une des revendications précédentes, **caractérisée en ce que** les segments de cercle concaves et convexes (76, 77) sont reliés tangentiellement à des points d'inflexion à la transition entre les courbures concaves et convexes.

7. Cartouche filtrante selon l'une des revendications précédentes, **caractérisée en ce que** la longueur d'arc des segments de cercle convexes (76) est plus longue que la longueur d'arc des segments de cercle concaves (77).

8. Cartouche filtrante selon l'une des revendications précédentes, **caractérisée en ce que** les segments de cercle convexes et concaves (76, 77) présentent le même rayon de segment S.

9. Cartouche filtrante selon l'une des revendications précédentes, **caractérisée en ce que** les segments de cercle convexes et concaves (76, 77) sont situés à l'intérieur d'un cercle d'enveloppe extérieur (74) et à l'extérieur d'un cercle d'enveloppe intérieur (75), les centres de cercle (78) des segments de cercle convexes (76) étant situés à l'intérieur du cercle d'enveloppe intérieur (75) et les centres des cercles (79) des segments de cercle concaves (77) étant situés à l'extérieur du cercle d'enveloppe extérieur (74).

10. Cartouche filtrante selon l'une des revendications précédentes, **caractérisée en ce que** le rayon du cercle d'enveloppe intérieur (75) est compris entre 5% et 15% du rayon du cercle d'enveloppe extérieur (74).

11. Cartouche filtrante selon l'une des revendications précédentes, **caractérisée en ce que** le rayon des segments de cercle convexes et/ou concaves (76, 77) est compris entre 20% et 35% du rayon du cercle d'enveloppe extérieur (74) .

12. Cartouche filtrante selon l'une des revendications précédentes, **caractérisée en ce que** l'épaisseur de paroi (W) entre les faces intérieures de paroi (72) s'étendant parallèlement à la face extérieure de paroi (71) est comprise entre 5% et 15% du rayon du cercle d'enveloppe extérieur (74).

13. Cartouche filtrante selon l'une des revendications précédentes, **caractérisée en ce que** les points d'inflexion (83) de la courbure des segments de cercle (76, 77) sont plus proches du cercle d'enveloppe intérieur (75) que du cercle d'enveloppe extérieur (74).

14. Cartouche filtrante selon l'une des revendications précédentes, **caractérisée en ce que** la tubulure annulaire de raccordement au filtre (23) de l'élément de raccordement au filtre, qui présente la surface (28) de fixation de filtre, est constituée, au moins dans la zone d'au moins la surface (28) de fixation de filtre prévue comme surface d'étanchéité du filtre, d'une matière plastique plus résistante à la déformation, à la température de fonctionnement, qu'un élastomère.

15. Cartouche filtrante (22) selon l'une des revendications précédentes, **caractérisée en ce que** la tubulure annulaire (23) de raccordement de filtre de l'élément de raccordement de filtre présente une paroi extérieure (71) et/ou une paroi intérieure (72) qui, par rapport à la position de fonctionnement de la cartouche filtrante, sont inclinées par rapport à la verticale d'un angle ω1 et/ou ω2, de sorte que la paroi extérieure (71) et la paroi intérieure (72) de la cartouche filtrante convergent de haut en bas en étant inclinées l'une par rapport à l'autre.

16. Cartouche filtrante (22) selon l'une des revendications précédentes, **caractérisée en ce que** la paroi extérieure biseautée (71) présente une surface extérieure (28) de fixation de filtre et/ou la paroi intérieure biseautée (72) présente une surface intérieure de fixation de filtre.
